# EUROPÄISCHE PATENTSCHRIFT

(11) **EP 0 758 952 B1**
(45) Veröffentlichungstag und Bekanntmachung des Hinweises auf die Patenterteilung: **08.04.1998**
(21) Anmeldenummer: 95920004.9
(22) Anmeldetag: 09.05.1995
(51) Int. Cl.: B29C 67/00

(54) **VERFAHREN UND VORRICHTUNG ZUM HERSTELLEN DREIDIMENSIONALER OBJEKTE**
PROCESS AND DEVICE FOR MANUFACTURING THREE-DIMENSIONAL OBJECTS
PROCEDE ET DISPOSITIF DE FABRICATION D'OBJETS TRIDIMENSIONNELS

(30) Priorität: 13.05.1994 DE 4416901; 13.05.1994 DE 4416988
(43) Veröffentlichungstag der Anmeldung: 26.02.1997
(73) Patentinhaber: EOS GmbH ELECTRO OPTICAL SYSTEMS, 82152 Planegg (DE)
(72) Erfinder: SERBIN, Jürgen, 82166 Gräfelfing (DE); REICHLE, Johannes, 81375 München (DE); LANGER, Hans J., 82166 Gräfelfing (DE)
(74) Vertreter: Prüfer, Lutz H., Dipl.-Phys.
(86) Internationale Anmeldenummer: EP9501742
(87) Internationale Veröffentlichungsnummer: WO9531326

(56) Entgegenhaltungen:
- EP-A- 0 406 513
- WO-A-89/11085
- PATENT ABSTRACTS OF JAPAN vol. 14 no. 300 (M-991) [4243] ,28.Juni 1990 & JP,A,02 095830 (MATSUSHITA ELECTRIC WORKS LTD) 6.April 1990,
- SYSTEMS & COMPUTERS IN JAPAN, Bd. 20, Nr. 3, 1.März 1989 Seiten 58-66, XP 000071510 TAKASHI NAKAI ET AL 'FABRICATION OF THREE-DIMENSIONAL OBJECTS USING LASER LITHOGRAPHY'

## Beschreibung

Die Erfindung betrifft ein Verfahren nach dem Oberbegriff des Anspruches 1 oder 11, bzw. eine Vorrichtung nach dem Oberbegriff des Anspruches 14 oder 15.

Eine derartige Vorrichtung bzw. ein derartiges Verfahren ist aus der EP-A-0 171 069 und unter dem Begriff "Stereolithographie" bekannt und kann durch schichtweises Verfestigen eines flüssigen, photopolymerisierbaren Materials mittels eines gebündelten Laserstrahles erfolgen. Ebenso kann dieses Verfahren auch durch Sinterung von Pulver mittels des Laserstrahles durchgeführt werden (siehe EP-A-0 287 657). In allen Fällen tritt das Problem auf, daß die Herstellungsgeschwindigkeit nicht beliebig erhöht werden kann, da bei vorgegebener Bündelung des Laserstrahles eine vom Typ des Lasers und des zu verfestigenden Materiales abhängige Scan-Geschwindigkeit des Laserstrahles nicht überschritten werden kann. Auch kann eine eventuelle Dejustage des Laserstrahles nicht festgestellt werden (siehe EP-A-0 287 657). In allen Fällen tritt das Problem auf, daß beispielsweise durch Erschütterungen, Alterung des Lasers oder sonstige Einwirkungen eine Dejustierung des Strahles oder einer Verschlechterung der Strahlenqualität stattfindet und damit die Herstellungsgenauigkeit verschlechtert wird.

Aus der WO 88/02677 ist ebenfalls ein Verfahren nach dem Oberbegriff des Anspruches 1 und 11 und eine Vorrichtung nach dem Oberbegriff des Anspruches 15 und 16 bekannt.

Aus der EP 0 375 097 A2 und der WO 89/11085 ist eine stereolithographische Vorrichtung mit einem Harztank bekannt, bei der seitlich des Harztankes zwei Sensoren angebracht sind, um das Intensitätsprofil des Strahles zu messen.

Aus der JP-A-2-95 830 ist ein Verfahren zum Herstellen eines dreidimensionalen Objektes bekannt, bei dem aufeinanderfolgende Schichten verfestigbaren Materials aufgetragen werden. Randbereiche des zu bildenden Objektes werden in jeder Schicht durch einen Lichtstrahl mit einem ersten Durchmesser verfestigt. Wenn der so verfestigte Randbereich eine Dicke von mehreren Schichtdicken aufweist, wird das durch den Randbereich umschlossene Innere mit einem Lichtstrahl mit einem zweiten Durchmesser auf einmal verfestigt, wobei der zweite Durchmesser größer als der erste Durchmesser ist.

Aus der JP-A-2-95829 ist ebenfalls ein Verfahren zum Herstellen eines dreidimensionalen Objektes aus einem lichthärtbaren Flüssigharz bekannt, bei dem die Fokussierung des Lichtstrahles verändert wird. Durch die Verlagerung des Brennpunktes nach oberhalb und nach unterhalb der Oberfläche des lichthärtbaren Flüssigharzes kann eine glatte äußere Oberfläche des dreidimensionalen Objektes erzielt werden.

Aus der EP-A-0 406 513 ist eine Vorrichtung zum Herstellen eines dreidimensionalen Objektes mit einer ersten und einer zweiten Lichtquelle bekannt. Die beiden Lichtquellen sind jeweils mit einem Ende eines Lichtleiters verbunden. Die jeweils anderen Enden der beider Lichtleiter sind an einer Platte befestigt und zueinander parallel ausgerichtet. Die beiden Enden der Lichtleiter sind so ausgebildet, daß der eine Lichtleiter einen Lichtstrahl mit einem ersten Durchmesser und der andere Lichtleiter einen Lichtstrahl mit einem zweiten größeren Durchmesser abgibt. Die Platte ist mit einer Positioniereinrichtung verbunden, mit der die beiden Enden der Lichtleiter in einer Ebene positionierbar sind.

Es ist Aufgabe der Erfindung ein einfach durchzuführendes Verfahren zur Herstellung eines dreidimensionalen Objektes und eine einfach zu bedienende Vorrichtung zur Herstellung eines dreidimensionalen Objektes zur Verfügung zu stellen, bei denen die Geschwindigkeit und die Genauigkeit bei der Herstellung des Objektes verbessert wird und eine konstante Qualität bei der Herstellung des Objektes sichergestellt wird.

Die Aufgabe wird erfindungsgemäß durch ein Verfahren mit den Merkmalen des Anspruches 1 oder 11 bzw. durch eine Vorrichtung mit den Merkmalen des Anspruches 14 oder 15 gelöst.

Erfindungsgemäß wird der zur Verfestigung verwendete Strahl möglichst unmittelbar über der Oberfläche der Materialschicht, also unmittelbar vor der Einwirkung auf das Material, vorzugsweise an einer Mehrzahl von über die Schicht verteilten Stellen gemessen und mit Referenzwerten verglichen. Damit kann eine eventuelle Verstaubung oder Dejustierung der Optik, ein Defekt der optischen oder elektronischen Komponenten zur Einstellung des Strahles und eine Strahländerung aufgrund von Alterungserscheinungen festgestellt, angezeigt und gegebenenfalls korrigiert werden.

Erfindungsgemäß läßt sich die Bündelung des zur Verfestigung verwendeten Strahles verändern und messen, so daß je nach dem zu verfestigenden Bereich der Schichten, dem Typ des verwendeten Lasers und des Materiales jeweils eine bezüglich der Herstellungsgeschwindigkeit und Genauigkeit optimale Bündelung und Ausrichtung des Strahles eingestellt werden kann. Ferner kann eine eventuelle Verstaubung oder Dejustierung der Optik, ein Defekt der optischen oder elektronischen Komponenten zur Einstellung des Strahles und eine Strahländerung aufgrund von Alterungserscheinungen festgestellt, angezeigt und gegebenenfalls korrigiert werden.

Die Erfindung wird im weiteren anhand von Ausführungsbeispielen unter Bezug auf die Figuren beschrieben.
Von den Figuren zeigen:
- Fig. 1: eine schematische Darstellung der erfindungsgemäßen Vorrichtung;
- Fig. 2: eine Darstellung des Prinzips zur Veränderung der Bündelung des Strahles;
- Fig. 3: eine Darstellung der je nach zu verfestigendem Bereich unterschiedlichen Bündelung des Strahles vorzugsweise bei Verwendung eines gepulsten Lasers;
- Fig. 4: eine perspektivische, schematische Darstellung einer Positioniervorrichtung für einen erfindungsgemäßen Sensor;
- Fig. 5: eine Darstellung einer ersten Ausführungsform des Sensors; und
- Fig. 6: eine Darstellung einer zweiten Ausführungsform des Sensors.

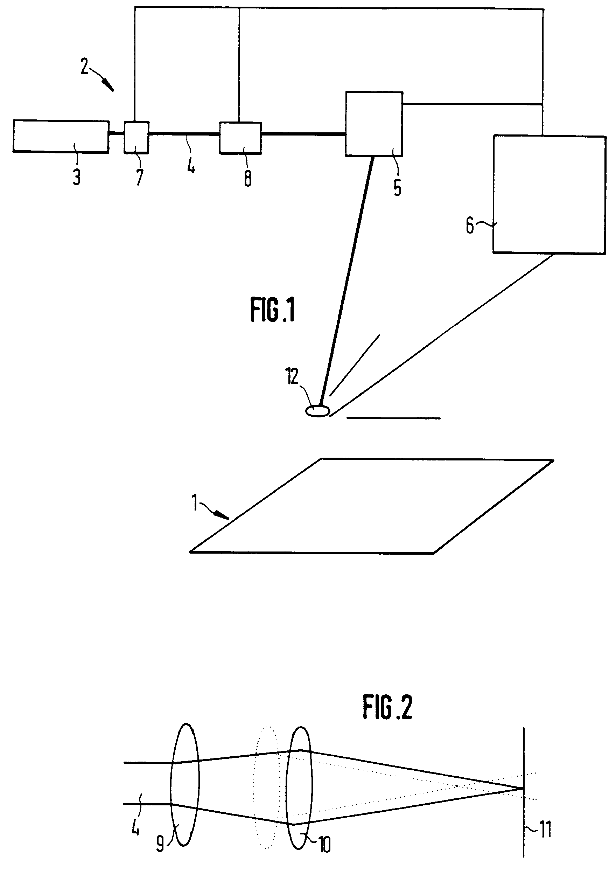

Die Darstellung der erfindungsgemäßen Vorrichtung in Fig. 1 zeigt eine Schicht 1 eines mittels elektromagnetischer Strahlung verfestigbaren Materiales, beispielsweise einer polymerisierbaren Flüssigkeit oder Paste oder eines sinterbaren Pulvermaterials, sowie eine über dieser Schicht angeordnete Vorrichtung 2 zum Verfestigen des Materiales der Schicht 1 an den dem herzustellenden Objekt enstsprechenden Stellen. Die Verfestigungsvorrichtung 2 weist eine Strahlungsquelle 3 in Form eines Lasers auf, die einen gebündelten Lichtstrahl 4 auf eine Ablenkeinrichtung 5 richtet, mittels der der Lichtstrahl 4 auf die gewünschten Stellen der Schicht 1 abgelenkt werden kann. Zu diesem Zweck ist die Ablenkeinrichtung mit einer Steuereinheit 6 zur entsprechenden Steuerung der Ablenkeinrichtung 5 verbunden.

Zwischen der Strahlungsquelle 3 und der Ablenkeinrichtung 5 ist dem Lichtstrahl 4 nacheinander ein Modulator 7 und eine variable Fokuseinrichtung 8 angeordnet, die ebenfalls mit der Steuereinheit 6 zur Steuerung in der weiter unten beschriebenen Weise verbunden sind. Der Modulator kann beispielsweise als akusto-optischer, elektro-optischer oder mechanischer Modulator ausgebildet sein und dient als "Schalter" zum Durchschalten bzw. Unterbrechen des Strahles 4.

Die variable Fokuseinrichtung 8 dient dazu, die Bündelung des Strahles 4 zu verändern. Zu diesem Zweck weist sie in der in Fig. 2 genauer dargestellten Weise in Richtung des Strahles 4 eine Zerstreuungslinse 9 und nachfolgend eine Sammellinse 10 auf. Die Sammellinse 10 ist in Richtung des Strahles 4 beispielsweise zwischen der gestrichelten Position in Fig. 2 und der in durchgezogen Linien gezeichneten Position positionierbar und bewirkt damit je nach ihrer Position eine Veränderung des Fokus und damit des Durchmessers des Strahles an einer Arbeits- oder Referenzebene 11, die beispielsweise die Oberfläche der Schicht 1 sein kann. Die Verschiebung der Sammellinse 10 erfolgt durch eine (nicht gezeigte) Verschiebevorrichtung unter Verwendung eines Schrittmotors oder Servomotors, die mit der Steuereinheit 6 verbunden ist. Anstelle der Anordnung mit zwei Linsen 9, 10 kann auch jede andere geeignete Mehrlinsenanordnung verwendet werden, bei der die Fokusänderung durch Verschieben von zwei Linsen relativ zueinander erfolgt. Anstatt der variablen Fokuseinheit 8 kann die Ablenkeinrichtung 5 auch Umlenkspiegel mit einem einstellbaren, variablen Krümmungsradius aufweisen. In diesem Fall kann die Bündelung des Strahles 4 durch Ändern des Krümmungsradius der Umlenkspiegel verändert werden.

Zwischen der Ablenkeinrichtung 5 und der Schicht 1 ist ferner ein Sensor 12 angeordnet, der mittels der in Fig. 4 näher dargestellten Positioniervorrichtung 13 in einer Ebene parallel zu und vorzugsweise unmittelbar oberhalb der Schicht 1 an jede Stelle oberhalb der Schicht 1 verschoben werden kann. Die Positioniervorrichtung 13 ist als X, Y-Positioniervorrichtung ausgebildet, wobei der Sensor 12 in einer ersten X-Richtung entlang der Oberseite eines sich in X-Richtung über die Schicht 1 erstreckenden Abstreifers 14 verschiebbar ist, der wiederum in Y-Richtung über die Schicht 1 zum Einstellen einer gewünschten Schichtdicke des Materiales verschoben werden kann. Gemäß einer anderen Ausführungsform kann der Sensor aber auch unabhängig vom Abstreifer positioniert werden. Der Ausgang des Sensors ist mit der Steuereinheit 6 verbunden.

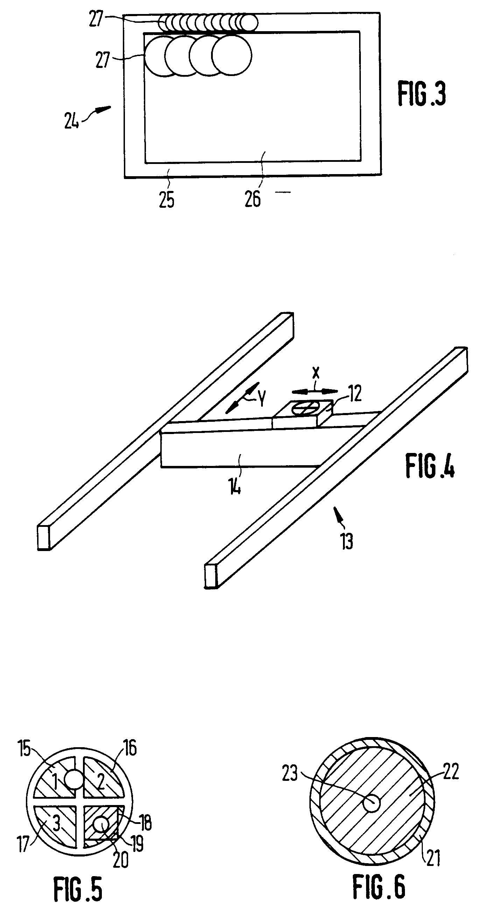

Eine erste Ausführungsform des Sensors 12 ist in Fig. 5 dargestellt. Der Sensor 12 nach Fig. 5 ist als Quadrantensensor mit einem in jedem Quadranten angeordneten lichtempfindlichen Element in Form einer Photodiode 15, 16, 17, 18 ausgebildet. Die Photodiode 18 eines Quadranten ist mittels einer strahlungsundurchlässigen Abdeckung, beispielsweise eines Metallplättchens 19, abgedeckt, in deren Mitte sich eine Blendenöffnung 20 befindet. Gemäß einer in Fig. 6 gezeigten zweiten Ausführungsform ist der Sensor 12 als Einzelsensor mit nur einem einzigen Feld ausgebildet, wobei in dem Feld ein lichtempfindliches Element in Form einer Photodiode 21 angeordnet ist, die wiederum mit einer strahlungsundurchlässigen Abdeckung, beispielsweise einem Metallplätten, bis auf eine zentrale Blendenöffnung abgedeckt ist. Der Durchmesser der Blendenöffnung 20, 23, ist etwa 20 bis 50µm, vorzugsweise 35µm.

Im Betrieb wird zunächst der Laserstrahl 4 bezüglich seiner Position, Leistung und seines Durchmessers gemessen. Die Positonsbestimmung erfolgt dabei beispielsweise mittels des in Fig. 5 gezeigten Sensors 12 dadurch, daß der Sensor 12 an einer bestimmten definierten X, Y-Stelle positioniert wird und die Ablenkeinrichtung 5 von der Steuereinheit 6 so gesteuert wird, daß der abgelenkte Strahl 4 den Sensor 12 überstreicht und dabei vom Feld der Photodiode 15 zu dem in der Photodiode 16 wandert. Dabei werden die von beiden Photodioden abgegebenen Ausgangssignale verglichen; bei Gleichheit entspricht die Position des Strahles 4 genau dem Übergang zwischen den beiden Photodiodenfeldern und damit der Mittenposition des Sensors 12. Dieselbe Messung wird auch für den Übergang von der Photodiode 15 zur Photodiode 17 vorgenommen. Durch Vergleich der erhaltenen Positionsdaten mit der entsprechenden Positionsvorgabe für die Ablenkeinrichtung 5 wird festgestellt, ob die Steuerung für den Strahl 4 korrekt ist oder ob eine Dejustierung vorliegt. Im letzteren Fall wird eine Korrektur der Steuerung in der Steuereinheit 6 oder auch eine Neujustage der Vorrichtung vorgenommen. Die Positionsmessung wird durch Verfahren des Sensors 12 an über die Schichtoberfläche 1 verteilte Positionen mittels der Positioniervorrichtung 13 an beliebigen Stellen innerhalb des Belichtungsfeldes vorgenommen, so daß die Positioniergenauigkeit an der Verfestigungsvorrichtung 2 exakt bestimmbar ist. Ebenso ist es allerdings auch möglich, nur an ausgewählten Punkten, beispielsweise an zwei Punkten, zu messen, um eine globale Drift beispielweise aufgrund von Temperaturänderung festzustellen. Diese kann wiederum durch entsprechende Korrektur der Steuereinheit 6 bzw. der darin gespeicherten Steuersoftware kompensiert werden.

Die Leistung des Strahles 4 kann durch direkte Auswertung der Ausgangssignale der Photodioden 15, 16 und 17 deren Amplitude der Leistung entspricht, vorgenommen werden. Hier ist auch der Einsatz von Pyroelementen denkbar. Durch Vergleich mit Sollwerten kann wiederum ein Fehler in der Verfestigungsvorrichtung 2 festgestellt werden, beispielsweise eine Verstaubung der Optik, eine Alterung oder auch ein Ausfall von optischen oder elektronischen Komponenten.

Für die Messung des Durchmessers bzw. des Fokus des Strahles 4 wird die Ablenkeinrichtung 5 und/oder die Positioniervorrichtung 13 so gesteuert, daß der abgelenkte Strahl 4 die Blendenöffnung 20 des Sensors nach Fig. 5 oder die Blendenöffnung 23 des Sensors nach Fig. 6 in zwei Koordinatenrichtungen überstreicht. Dadurch wird das Intensitätsprofil des Strahles 4 abgetastet und aus den gewonnenen Intensitätsdaten des Profils der Fokus bzw. Durchmesser des Strahles 4 berechnet. Diese Messung kann im gesamten Belichtungsfeld oder auch nur an ausgewählten Punkten, beispielsweise in Verbindung mit der Leistungsmessung, durchgeführt werden. Durch Vergleich mit entsprechenden Sollwerten kann wiederum eine Abweichung beispielsweise aufgrund der Alterung des Lasers oder einer Dejustage des optischen Systems festgestellt werden. In diesem Fall kann in gewissem Rahmen eine Korrektur durch Veränderung des Fokus mittels Ansteuerung der variablen Fokueinheit 8 vorgenommen werden.

Bei Verwendung des in Fig. 6 gezeigten Sensors 12 wird die Position und Leistung des Strahles 4 aufgrund von Berechnungen ermittelt, und zwar die Position durch Bestimmung des Intensitätsmaximums und die Leistung durch Integration des Profils. Derartige Rechenverfahren sind bekannt, so daß sie hier nicht näher erläutert werden müssen.

Nach der Einstellung und Messung des Strahles 4 wird eine Materialschicht 1 aufgetragen und durch gezieltes Bestrahlen der Schicht 1 mittels des abgelenkten Strahles 4 an den dem Objekt entsprechenden Punkten verfestigt. In Fig. 3 ist ein Bereich 24 dargestellt, der beispielhaft die zu verfestigenden Stellen des Objektes dieser Schicht umfassen soll. Dieser Bereich wird für die Verfestigung in einen äußeren Hüllbereich 25 und einen inneren Kernbereich 26 aufgeteilt, wobei der Hüllbereich 25 den Kernbereich 26 vorzugsweise vollständig umschließt. Zur Verfestigung steuert die Steuereinheit 6 die variable Fokuseinheit 8, die Ablenkeinrichtung 5 und den Laser 3 derart, daß die Schicht 1 in der in der Fig. 3 durch die kleinen Kreise angedeuteten Weise im Hüllbereich 25 mit einem kleinen Strahldurchmesser bzw. Fokus und im Kernbereich 26, angedeutet durch die größeren Kreise, mit einem größeren Strahldurchmesser bzw. Fokus bestrahlt wird. Damit wird im Hüllbereich eine feinere und genauere Verfestigung des Materiales im Hüllbereich 25, der die Oberfläche bzw. die Kontur des Objektes bildet, erreicht. Wird gleichzeitig gemäß einer bevorzugten Weiterbildung die Ablenkeinrichtung 5 so gesteuert, daß die Geschwindigkeit, mit der der abgelenkte Strahl 4 über die Schicht 1 streicht (d.h. die Scan-Geschwindigkeit), im Kernbereich 26 höher als im Hüllbereich 25 ist, dann läßt sich auch die Herstellungszeit wesentlich verkürzen. Diese Maßnahme ist insbesondere bei hohen Leistungen des Lasers 3 sinnvoll, da dann auch bei größerem Strahldurchmesser oder Fokus eine ausreichende Leistungsdichte vorhanden ist, um eine Verfestigung auch bei höheren Scan-Geschwindigkeiten zu erreichen. Bei Einsatz einer Strahlungsquelle mit einstellbarer Leistung kann in diesem Fall die Leistung bei der Verfestigung des Hüllbereiches 25 verringert werden, um die Energie- bzw. Leistungsdichte auf einen für die Verfestigung geeigneten Wert einzustellen.

Eine besonders bevorzugte Anwendung findet das oben beschriebene Verfahren bei Verwendung eines gepulsten Lasers als Strahlungsquelle 3. Die Pulsrate derartiger Laser ist in der Regel zu niedrig um bei kleinem Fokus hohe Scan-Geschwindigkeiten zu erzielen. Vielmehr werden dann nur noch einzelne voneinander beabstandete Stellen verfestigt. Andererseits nimmt die mittlere Leistung dieses Lasers ab einer bestimmten Pulsrate ab. Weiterhin ist die Pulsdauer von beispielsweise frequenzvervielfachten FK-Lasern (Festkörper-Lasern) sehr kurz (ca. 30ns). Die Einstellung der in das Material eingebrachten Energie- bzw. Leistungsdichte ist nicht mehr über die Scan-Geschwindigkeit, sondern nur noch durch Abschwächung, die Repetitionsrate des Lasers und/oder die Einstellung des Strahldurchmessers möglich. Für einen Betrieb mit größtmöglicher Effizienz hat sich erfindungsgemäß die Einstellung des Strahldurchmessers herausgestellt. Für einen vorgegebenen Wert des Strahldurchmessers ergibt sich dann eine optimale Repetitionsrate in Verbindung mit einer maximalen Scan-Geschwindigkeit. Bei geringerer Scan-Geschwindigkeit kann man den Energieeintrag erhöhen, bei ebenso erhöhtem Überlapp zwischen den Punkten.

Erfindungsgemäß wird damit zur Erzielung einer kurzen Herstellungszeit bei trotzdem hoher Strukturauflösung bei gepulsten Lasern im Hüllbereich 25 mit kleinerem Fokus und im Kernbereich 26 mit größerem Fokus verfestigt und die Scan-Geschwindigkeit und die Repetitionsrate jeweils so eingestellt, daß in beiden Bereichen die bei jedem Puls verfestigten Bereiche 27 überlappen und damit eine durchgehende Linie verfestigt wird. Dieser Sachverhalt ist in Fig. 3 dargestellt: Da die damit zulässige Scan-Geschwindigkeit proportional zum Durchmesser des in Fig. 3 kreisförmig dargestellten Strahles oder Fokus 27 ist, kann die Scan-Geschwindigkeit im Kernbereich 26 gegenüber derjenigen des Hüllbereiches 25 um den selben Faktor erhöht werden, um den der Durchmesser im Kernbereich vergrößert ist. Außerdem sind im Kernbereich 26 auch entsprechend weniger Überstreichungen erforderlich. Damit reduziert sich die Herstellungszeit mit dem Quadrat der relativen Durchmesservergrößerung. In beiden Bereichen 25, 26 ergibt sich aus der entsprechenden Scan-Geschwindigkeit die Repetitionsrate und der Strahlfokus und damit mittlere Leistung des Lasers, so daß im Ergebnis im Hüllbereich 25 mit kleinerer mittlerer Leistung und im Kernbereich 26 mit größerer mittlerer Leistung gefahren wird.

Zur Einstellung des Fokus wird von der Steuereinheit 6 je nachdem, ob die Ablenkeinrichtung 5 den Strahl 4 gerade auf den Kernbereich 26 oder den Hüllbereich 25 ablenkt, die Position der Sammellinse 10 relativ zur Zerstreuungslinse 9 durch Axialverschiebung verändert. Die entsprechenden Steuerdaten sind in der Steuereinheit 6 gespeichert. Vorzugsweise wird zunächst mit einer kleinen Fokuseinstellung der Hüllbereich 25 verfestigt, danach der Fokus vergrößert und mit der einmal eingestellten Vergrößerung der Kernbereich 26 verfestigt. Eine Messung und Korrektur der Fokuseinstellung des Strahles ist wiederum mittels des Sensors 12 in der oben dargelegten Weise möglich.

Die weiteren Schichten des Objektes werden in der gleichen Weise aufgetragen und verfestigt.

Die Messung des Strahles in der oben beschriebenen Weise kann vor der Herstellung eines Objektes, aber auch zwischen der Verfestigung einzelner Schichten oder auch in größeren Abständen, z.B. tageweise, vorgenommen werden. Festgestellte Abweichungen von zulässigen Werten können auch auf einer Anzeigevorrichtung dargestellt werden.

Als FK-Laser (Festkorper-Laser) werden bevorzugt diodengepulste Neodym YAG-Laser oder diodengepulste Neodym YLF-Laser mit einer Leistung von etwa 300mW verwendet.

## Patentansprüche

1. Verfahren zum Herstellen eines dreidimensionalen Objekts, bei dem aufeinanderfolgende Schichten eines durch elektromagnetische Strahlung verfestigbaren Materials aufgetragen und durch Bestrahlung mittels eines gebündelten Strahls (4) an den dem Objekt entsprechenden Stellen der Schichten (1) verfestigt werden,
dadurch gekennzeichnet, daß die Bündelung des Strahls (4) bei der Verfestigung einer Schicht (1) verändert wird.

2. Verfahren nach Anspruch 1,
dadurch gekennzeichnet, daß die Bündelung in Abhängigkeit von der zu verfestigenden Stelle der Schicht (1) verändert wird.

3. Verfahren nach Anspruch 2,
dadurch gekennzeichnet, daß in einem einem Randbereich des Objekts entsprechenden ersten Bereich (25) die Bündelung zur Bildung eines kleineren Fokus verstärkt wird und in einem einem Innenbereich des Objekts entsprechenden zweiten Bereich (26) die Bündelung zur Bildung eines größeren Fokus verringert wird.

4. Verfahren nach einem der Ansprüche 1 bis 3,
dadurch gekennzeichnet, daß die Bündelung in Abhängigkeit von der Leistung der Strahlungsquelle (3) für den gebündelten Strahl verändert wird.

5. Verfahren nach einem der Ansprüche 1 bis 4,
dadurch gekennzeichnet, daß die Bündelung in Abhängigkeit von einer Geschwindigkeit, mit der der gebündelte Strahl über die Schicht bewegt wird, verändert wird.

6. Verfahren nach einem der Ansprüche 1 bis 5,
dadurch gekennzeichnet, daß eine gepulste Strahlungsquelle (3) verwendet wird und die Bündelung in Abhängigkeit von der Pulsenergie eingestellt wird.

7. Verfahren nach den Ansprüchen 3 bis 6,
dadurch gekennzeichnet, daß die Verfestigung im ersten Bereich (25) mit einer starken Bündelung und einer niedrigen Geschwindigkeit und im zweiten Bereich (26) mit einer schwächeren Bündelung und einer höheren Geschwindigkeit durchgeführt wird.

8. Verfahren nach Anspruch 7,
dadurch gekennzeichnet, daß im zweiten Bereich (26) die Strahlleistung bzw. bei Verwendung eines gepulsten Lasers die mittlere Strahlleistung erhöht ist.

9. Verfahren nach einem der Ansprüche 1 bis 8,
dadurch gekennzeichnet, daß die Position, die Leistung und/oder der Fokusdurchmesser des Strahls (4) an einer Stelle vorzugsweise unmittelbar oberhalb der zu verfestigenden Schicht (1) gemessen wird.

10. Verfahren nach Anspruch 9,
dadurch gekennzeichnet, daß die Bündelung in Abhängigkeit vom Meßergebnis verändert wird.

11. Verfahren zum Herstellen eines dreidimensionalen Objekts, bei dem aufeinanderfolgende Schichten eines durch elektromagnetische Strahlung verfestigbaren Materials aufgetragen und durch Bestrahlung mittels eines gebündelten Strahls (4) an den dem Objekt entsprechenden Stellen der Schichten (1) verfestigt werden,
dadurch gekennzeichnet, daß die Position, die Leistung und/oder der Durchmesser des Strahls (4) an einer Stelle unmittelbar oberhalb der zu verfestigenden Schicht (1) gemessen wird, wobei
daß das Meßergebnis mit vorgegebenen Referenzwerten verglichen wird und aufgrund des Vergleiches eine Fehleranzeige oder Korrektur des Strahls (4) vorgenommen wird.

12. Verfahren nach einem der Ansprüche 9 oder 11,
dadurch gekennzeichnet, daß die Messung an einer Mehrzahl von Stellen oberhalb der Materialschicht vorgenommen wird.

13. Verfahren nach einem der Ansprüche 1 bis 12,
dadurch gekennzeichnet, daß als Strahl (4) ein Strahl eines Festkörper-Lasers (3) verwendet wird.

14. Vorrichtung zur Herstellung eines dreidimensionalen Objekts durch aufeinanderfolgendes Verfestigen von Schichten eines durch Einwirkung elektromagnetischer Strahlung verfestigbaren Materials, mit einer Vorrichtung zum Erzeugen einer Schicht (1) des Materials, einer Strahlungsquelle (3) zur Erzeugung eines gebündelten Strahls (4) der elektromagnetischen Strahlung und einer Ablenkvorrichtung (5) zum Ablenken des gerichteten Strahls (4) auf dem Objekt entsprechende Stellen der Schicht (1),
dadurch gekennzeichnet, daß zwischen der Ablenkeinrichtung (5) und der Schicht (1) ein Sensor (12) zur Messung des Strahls (4) angeordnet ist und daß eine Steuereinheit (6) vorgesehen ist, die Position, Leistung und/oder Durchmesser des gebündelten Strahles (4) in Abhängigkeit eines Ausgangssignales des Sensors (12) steuern kann.

15. Vorrichtung zur Herstellung eines dreidimensionalen Objekts durch aufeinanderfolgendes Verfestigen von Schichten eines durch Einwirkung elektromagnetischer Strahlung verfestigbaren Materials, mit einer Vorrichtung zum Erzeugen einer Schicht (1) des Materials, einer Strahlungsquelle (3) zur Erzeugung eines gebündelten Strahls (4) der elektromagnetischen Strahlung und einer Ablenkvorrichtung (5) zum Ablenken des gerichteten Strahls (4) auf dem Objekt entsprechende Stellen der Schicht (1),
dadurch gekennzeichnet, daß die Strahlungsquelle (3) einen Festkörper-Laser aufweist.

16. Vorrichtung nach Anspruch 15,
dadurch gekennzeichnet, daß eine im Strahl (4) angeordnete variable Fokuseinheit (8) zur Veränderung der Bündelung des Strahls (4) vorgesehen ist.

17. Vorrichtung nach Anspruch 15 oder 16,
dadurch gekennzeichnet, daß der Festkörper-Laser ein Neodym YAG-Laser oder ein Neodym YLF-Laser ist.

18. Vorrichtung nach einem der Ansprüche 16 oder 17,
dadurch gekennzeichnet, daß die variable Fokuseinheit (8) zwischen der Strahlungsquelle (3) und der Ablenkvorrichtung (5) angeordnet ist.

19. Vorrichtung nach einem der Ansprüche 16 bis 18,
dadurch gekennzeichnet, daß die variable Fokuseinheit (8) im Strahl zwei in Axialrichtung relativ zueinander verschiebbare Linsen (9, 10) aufweist.

20. Vorrichtung nach einem der Ansprüche 16 bis 19,
dadurch gekennzeichnet, daß im Strahl (4) ein Modulator (7) zum gesteuerten Unterbrechen bzw. Durchlassen des Strahls angeordnet ist.

21. Vorrichtung nach einem der Ansprüche 16 bis 20,
dadurch gekennzeichnet, daß die variable Fokuseinheit (8) und die Ablenkvorrichtung (5) und gegebenenfalls der Modulator (7) mit einer Steuereinheit (6) zur Veränderung des Fokus des Strahls (4) in Abhängigkeit von der Ablenkung verbunden sind.

22. Vorrichtung nach einem der Ansprüche 15 bis 21,
dadurch gekennzeichnet, daß zwischen der Ablenkeinrichtung (5) und der Schicht (1) ein Sensor (12) zur Messung des Strahls (4) angeordnet ist.

23. Vorrichtung nach Anspruch 14 oder 22,
dadurch gekennzeichnet, daß der Sensor (12) mit einer Positioniervorrichtung (13) zum Positionieren des Sensors an einer Mehrzahl von Stellen in einer Ebene parallel zur Schicht (1) verbunden ist.

24. Vorrichtung nach Anspruch 23,
dadurch gekennzeichnet, daß die Positioniervorrichtung (13) als x, y-Positioniervorrichtung ausgebildet ist.

25. Vorrichtung nach Anspruch 24,
dadurch gekennzeichnet, daß eine sich in einer ersten Richtung (X) quer über die Schicht (1) erstreckende und in einer zweiten Richtung (Y) über die Schicht (1) verfahrbare Abstreifvorrichtung vorgesehen ist und daß der Sensor (12) an der Abstreifvorrichtung in der ersten Richtung (X) verschiebbar angeordnet ist.

26. Vorrichtung nach einem der Ansprüche 14, 22 bis 25,
dadurch gekennzeichnet, daß der Sensor (12) zur Messung der Position, der Leistung und/oder des Durchmessers des Strahls (4) ausgebildet ist.

27. Vorrichtung nach einem der Ansprüche 14, 22 bis 26,
dadurch gekennzeichnet, daß der Sensor (12) als Quadrantendetektor mit mindestens drei Detektorsektoren (15, 16, 17) ausgebildet ist.

28. Vorrichtung nach einem der Ansprüche 14, 22 bis 26,
dadurch gekennzeichnet, daß der Sensor (12) einen Einzeldetektor mit einer bis auf eine Blendenöffnung (23) strahlungsundurchlässig abgedeckten, strahlungsempfindlichen Detektoroberfläche (21) aufweist.

29. Vorrichtung nach Anspruch 27 oder 28,
dadurch gekennzeichnet, daß der Einzeldetektor in einem der Quadranten angeordnet ist.

30. Vorrichtung nach einem der Ansprüche 14, 22 bis 29,
dadurch gekennzeichnet, daß der Sensor (12) und/oder die Positioniervorrichtung (13) mit der Steuereinheit verbunden sind.

## Claims

1. Process for manufacturing a three-dimensional object in which successive layers of a material which can be solidified by electromagnetic radiation are applied and are solidified by irradiating by means of a focused beam (4) at the points of the layers (1) corresponding to the object, characterized in that the focusing of the beam (4) is changed in the solidifying of a layer (1).

2. Process according to Claim 1, characterized in that the focusing is changed in dependence on the point of the layer (1) to be solidified.

3. Process according to Claim 2, characterized in that, in a first region (25), corresponding to an outer region of the object, the focusing is increased to form a smaller focus and, in a second region (26), corresponding to an inner region of the object, the focusing is reduced to form a larger focus.

4. Process according to one of Claims 1 to 3, characterized in that the focusing is changed in dependence on the power of the radiation source (3) for the focused beam.

5. Process according to one of Claims 1 to 4, characterized in that the focusing is changed in dependence on a speed with which the focused beam is moved over the layer.

6. Process according to one of Claims 1 to 5, characterized in that a pulsed radiation source (3) is used and the focusing is set in dependence on the pulse energy.

7. Process according to Claims 3 to 6, characterized in that the solidifying is carried out in the first region (25) with a strong focusing and a low speed and in the second region (26) with a weaker focusing and a higher speed.

8. Process according to Claim 7, characterized in that the beam power, or if a pulsed laser is used the average beam power, is increased in the second region (26).

9. Process according to one of Claims 1 to 8, characterized in that the position, the power and/or the focus diameter of the beam (4) is measured at a point preferably directly above the layer (1) to be solidified.

10. Process according to Claim 9, characterized in that the focusing is changed in dependence on the measurement result.

11. Process for manufacturing a three-dimensional object in which successive layers of a material which can be solidified by electromagnetic radiation are applied and are solidified by irradiating by means of a focused beam (4) at the points of the layers (1) corresponding to the object, characterized in that the position, the power and/or the diameter of the beam (4) is measured at a point directly above the layer (1) to be solidified, that the measurement result is compared with given reference values and a defect indication or correction of the beam (4) is performed on the basis of the comparison.

12. Process according to one of Claims 9 or 11, characterized in that the measurement is performed at a plurality of points above the material layer.

13. Process according to one of Claims 1 to 12, characterized in that a beam of a solid-state laser (3) is used as the beam (4).

14. Device for manufacturing a three-dimensional object by successive solidifying of layers of a material which can be solidified by the action of electromagnetic radiation, having a device for generating a layer (1) of the material, a radiation source (3) for generating a focused beam (4) of the electromagnetic radiation and a deflecting device (5) for deflecting the directed beam (4) onto points of the layer (1) corresponding to the object, characterized in that a sensor (12) for measuring the beam (4) is arranged between the deflecting means (5) and the layer (1) and in that there is provided a control unit (6), which can control the position, power and/or diameter of the focused beam (4) in dependence on an output signal of the sensor (12).

15. Device for manufacturing a three-dimensional object by successive solidifying of layers of a material which can be solidified by the action of electromagnetic radiation, having a device for generating a layer (1) of the material, a radiation source (3) for generating a focused beam (4) of the electromagnetic radiation and a deflecting device (5) for deflecting the directed beam (4) onto points of the layer (1) corresponding to the object, characterized in that the radiation source (3) has a solid-state laser.

16. Device according to Claim 15, characterized in that a variable focusing unit (8) arranged in the beam (4) is provided for changing the focusing of the beam (4).

17. Device according to Claim 15 or 16, characterized in that the solid-state laser is a neodymium YAG laser or a neodymium YLF laser.

18. Device according to one of Claims 16 or 17, characterized in that the variable focusing unit (8) is arranged between the radiation source (3) and the deflecting device (5).

19. Device according to one of Claims 16 to 18, characterized in that the variable focusing unit (8) has in the beam two lenses (9, 10) which can be displaced in the axial direction in relation to each other.

20. Device according to one of Claims 16 to 19, characterized in that a modulator (7) for controlled interruption or letting through of the beam is arranged in the beam (4).

21. Device according to one of Claims 16 to 20, characterized in that the variable focusing unit (8) and the deflecting device (5) and, if appropriate, the modulator (7) are connected to a control unit (6) for changing the focus of the beam (4) in dependence on the deflection.

22. Device according to one of Claims 15 to 21, characterized in that a sensor (12) for measuring the beam (4) is arranged between the deflecting means (5) and the layer (1).

23. Device according to Claim 14 or 22, characterized in that the sensor (12) is connected to a positioning device (13) for positioning the sensor at a plurality of points in a plane parallel to the layer (1).

24. Device according to Claim 23, characterized in that the positioning device (13) is designed as an X, Y positioning device.

25. Device according to Claim 24, characterized in that a stripping device which extends in a first direction (X) transversely over the layer (1) and can be moved in a second direction (Y) over the layer (1) is provided and in that the sensor (12) is arranged displaceably in the first direction (X) on the stripping device.

26. Device according to one of Claims 14, 22 to 25, characterized in that the sensor (12) is designed for measuring the position, the power and/or the diameter of the beam (4).

27. Device according to one of Claims 14, 22 to 26, characterized in that the sensor (12) is designed as a quadrant detector with at least three detector sectors (15, 16, 17).

28. Device according to one of Claims 14, 22 to 26, characterized in that the sensor (12) has a single detector with a radiation-sensitive detector surface (21) which is covered radiation-impermeably apart from an aperture (23).

29. Device according to Claim 27 or 28, characterized in that the single detector is arranged in one of the quadrants.

30. Device according to one of Claims 14, 22 to 29, characterized in that the sensor (12) and/or the positioning device (13) are connected to the control unit.

## Revendications

1. Procédé destiné à la fabrication d'un objet tridimensionnel, par lequel des couches successives d'un matériau durcissable par rayonnement électromagnétique sont déposées et durcies par le rayonnement d'un rayon focalisé (4) sur les zones des couches (1) correspondant à l'objet, caractérisé en ce que l'on fait varier la focalisation du rayon (4) au cours du processus de durcissement d'une couche (1).

2. Procédé selon la revendication 1, caractérisé en ce que l'on fait varier la focalisation en fonction de la zone à durcir de la couche (1).

3. Procédé selon la revendication 2, caractérisé en ce que, dans une première zone (25) correspondant à une zone de bordure de l'objet, la focalisation est accentuée pour obtenir un foyer plus petit et, dans une deuxième zone (26) correspondant à une zone intérieure de l'objet, la focalisation est diminuée pour obtenir un foyer plus grand.

4. Procédé selon l'une quelconque des revendications 1 à 3, caractérisé en ce que l'on fait varier la focalisation en fonction de la puissance de la source de rayonnement (3) pour le rayon focalisé.

5. Procédé selon l'une quelconque des revendications 1 à 4, caractérisé en ce que l'on fait varier la focalisation en fonction de la vitesse, avec laquelle le rayon focalisé se déplace au-dessus de la couche.

6. Procédé selon l'une quelconque des revendications 1 à 5, caractérisé en ce que l'on utilise une source de rayonnement (3) en régime pulsé et l'on règle la focalisation en fonction de l'énergie des impulsions.

7. Procédé selon l'une quelconque des revendications 3 à 6, caractérisé en ce que le processus de durcissement dans la première zone (25) est exécuté avec une forte focalisation et une faible vitesse et dans la deuxième zone (26) avec une focalisation plus faible et une vitesse plus élevée.

8. Procédé selon la revendication 7, caractérisé en ce que la puissance de rayonnement, ou la puissance moyenne de rayonnement en cas d'utilisation d'un laser en régime pulsé, est augmentée dans la deuxième zone (26).

9. Procédé selon l'une quelconque des revendications 1 à 8, caractérisé en ce que la position, la puissance et/ou le diamètre du foyer du rayon (4) sont mesurés dans une zone, de préférence directement au-dessus de la couche (1) à durcir.

10. Procédé selon la revendication 9, caractérisé en ce que l'on fait varier la focalisation en fonction des résultats des mesures.

11. Procédé destiné à la fabrication d'un objet tridimensionnel, par lequel des couches successives d'un matériau durcissable par rayonnement électromagnétique sont déposées et durcies par le rayonnement d'un rayon focalisé (4) sur les zones des couches (1) correspondant à l'objet, caractérisé en ce que la position, la puissance et/ou le diamètre du faisceau lumineux (4) sont mesurés dans une zone directement au-dessus de la couche (1) à durcir, les résultats des mesures étant comparés aux valeurs de référence données et, à la suite de cette comparaison, un défaut dans le rayon (4) est affiché ou corrigé.

12. Procédé selon la revendication 9 ou 11, caractérisé en ce que la mesure est exécutée en plusieurs points au-dessus de la couche de matériau.

13. Procédé selon l'une quelconque des revendications 1 à 12, caractérisé en ce que le rayon (4) utilisé est un rayon émis par un laser solide (3).

14. Dispositif destiné à la fabrication d'un objet tridimensionnel par durcissement successif des couches d'un matériau durcissable sous l'action d'un rayonnement électromagnétique, comprenant un dispositif utilisé pour appliquer une couche (1) du matériau concerné, une source de rayonnement (3) destinée à émettre un rayon (4) focalisé du rayonnement électromagnétique et un dispositif de déflexion (5) destiné à dévier le rayon (4) dirigé sur des zones de la couche (1) correspondant à l'objet, caractérisé en ce qu'un capteur de mesure (12) est disposé entre le dispositif de déflexion (5) et la couche (1) pour mesurer le rayon (4) et en ce qu'il est prévu de monter une unité de commande (6) qui peut commander la position, la puissance et/ou le diamètre du faisceau (4) focalisé, en fonction d'un signal de sortie du capteur (12).

15. Dispositif destiné à la fabrication d'un objet tridimensionnel par durcissement successif des couches d'un matériau durcissable sous l'action d'un rayonnement électromagnétique, comprenant un dispositif utilisé pour appliquer une couche (1) du matériau concerné, une source de rayonnement (3) destinée à émettre un rayon (4) focalisé du rayonnement électromagnétique et un dispositif de déflexion (5) destiné à dévier le rayon (4) dirigé sur des zones de la couche (1) correspondant à l'objet, caractérisé en ce que la source de rayonnement (3) contient un laser solide.

16. Dispositif selon la revendication 15, caractérisé en ce qu'il est prévu de monter une unité de focalisation variable (8) dans le rayon (4) pour faire varier la focalisation du rayon (4).

17. Dispositif selon la revendication 15 ou 16, caractérisé en ce que le laser solide est un laser YAG au néodyme ou un laser YLF au néodyme.

18. Dispositif selon la revendication 16 ou 17, caractérisé en ce que l'unité de focalisation variable (8) est montée entre la source de rayonnement (3) et le dispositif de déflexion (5).

19. Dispositif selon l'une quelconque des revendications 16 à 18, caractérisé en ce que l'unité de focalisation variable (8) est munie de deux lentilles (9, 10), montées dans le faisceau lumineux et qui peuvent être déplacées l'une par rapport à l'autre dans le sens axial.

20. Dispositif selon l'une quelconque des revendications 16 à 19, caractérisé en ce qu'un modulateur (7) est disposé dans le rayon (4) pour assurer l'interruption ou le passage commandés du rayon.

21. Dispositif selon l'une quelconque des revendications 16 à 20, caractérisé en ce que l'unité de focalisation variable (8) et le dispositif de déflexion (5) et, le cas échéant, le modulateur (7) sont reliés à une unité de commande (6) pour faire varier le foyer du rayon (4) en fonction de la déviation.

22. Dispositif selon l'une quelconque des revendications 15 à 21, caractérisé en ce qu'un capteur (12) destiné à mesurer le rayon (4) est monté entre le dispositif de déflexion (5) et la couche (1).

23. Dispositif selon la revendication 14 ou 22, caractérisé en ce que le capteur (12) est relié à un dispositif de positionnement (13) destiné à positionner le capteur en plusieurs points dans un plan parallèle à la couche (1).

24. Dispositif selon la revendication 23, caractérisé en ce que le dispositif de positionnement (13) est conçu comme un dispositif de positionnement en x, y.

25. Dispositif selon la revendication 24, caractérisé en ce qu'il est prévu de monter un dispositif de raclage qui s'étend dans une première direction (X) dans le sens transversal au-dessus de la couche (1) et qui se déplace vers une deuxième direction (Y) au-dessus de la couche (1) et en ce que le capteur (12) peut se déplacer contre le dispositif de raclage dans la première direction (X).

26. Dispositif selon l'une quelconque des revendications 14, 22 à 25, caractérisé en ce que le capteur (12) est conçu pour mesurer la position, la puissance et/ou le diamètre du rayon (4).

27. Dispositif selon l'une quelconque des revendications 14, 22 à 26, caractérisé en ce que le capteur (12) est conçu comme un détecteur à quadrants contenant au moins trois secteurs de détection (15, 16, 17).

28. Dispositif selon l'une quelconque des revendications 14, 22 à 26, caractérisé en ce que le capteur (12) comprend un détecteur unique avec une surface de détection (21) sensible aux rayonnements et masquée, à l'exception d'un diaphragme (23), par une protection opaque aux rayonnements.

29. Dispositif selon la revendication 27 ou 28, caractérisé en ce que le détecteur unique est disposé dans l'un des quadrants.

30. Dispositif selon l'une quelconque des revendications 14, 22 à 29, caractérisé en ce que le capteur (12) et/ou le dispositif de positionnement (13) sont reliés à une unité de commande.
